# EUROPEAN PATENT APPLICATION

(11) **EP 3 021 447 A1**
(43) Date of publication of application: **18.05.2016**
(21) Application number: 15187830.3
(22) Date of filing: 01.10.2015
(51) Int. Cl.: H02J 3/38, H02M 7/5395

(54) **PHOTOVOLTAIC INVERTER**

(30) Priority: 13.11.2014 KR 20140158235
(71) Applicant: LSIS Co., Ltd., Gyeonggi-Do 14119 (KR)
(72) Inventor: YOON, Sun Jae, 14125 Gyeonggi-do (KR)
(74) Representative: Awapatent AB

(57) **Abstract**

The present invention relates to a photovoltaic inverter capable of reducing a leakage current and a switching loss by changing a pulse width modulation (PWM) method and a configuration of an output filter. To this end, the photovoltaic inverter includes a direct-current (DC) link capacitor connected in parallel to a photovoltaic module, a switch unit including first to fourth switches and operating by a half unipolar switching method, and a reactor having one end connected to another end of the first switch and one end of the second switch, and another end connected to a grid, the reactor having a predetermined inductance.

## Description

### BACKGROUND OF THE DISCLOSURE

### 1. Field of the Disclosure

This disclosure relates to a photovoltaic inverter, and more particularly, a photovoltaic inverter, capable of reducing a leakage current and a switching loss by changing a Pulse-Width Modulation (abbreviated as "PWM" hereinafter) method and a configuration of an output filter of the photovoltaic inverter.

### 2. Background of the Disclosure

In general, a photovoltaic inverter (or a grid-connected inverter) is an electric power converter, namely, a system of switching direct-current (abbreviated as "DC" hereinafter) input electric power from a photovoltaic power generator into alternating current (abbreviated as "AC" hereinafter) by connecting to a commercial AC grid, and transferring the switched AC to the commercial AC grid.

A switching method used in the photovoltaic inverter includes a bipolar switching method or a uni-polar switching method. However, this switching method requires for an output filter designed in a great size or causes a large leakage current, thereby lowering efficiency of the entire system.

Korean Registration Patent No. 10-0963521 can be referred as a patent document according to a prior art.

### SUMMARY OF THE DISCLOSURE

Therefore, an object of the present disclosure is to provide a photovoltaic inverter having an improved PWM method and an improved configuration of an output filter.

To achieve these and other advantages and in accordance with the purpose of this disclosure, as embodied and broadly described herein, there is provided a photovoltaic inverter comprising:
a direct current link capacitor connected in parallel to a photovoltaic module;
a switch unit including first to fourth switches and operating according to a half unipolar switching; and
a reactor having one end connected to another end of the first switch and one end of the second switch, and another end connected to a grid, the reactor having a predetermined inductance,
wherein the half unipolar switching is switching a pair of switches at one leg according to a first frequency, and is switching another pair of switches at the other leg according to a higher frequency than the first frequency.

In accordance with one aspect of the present invention, the switch unit comprises:
a first switch having one end connected to a positive-pole output terminal of the photovoltaic module, one end of the DC link capacitor and one end of the third switch, and the another end connected to the one end of the second switch and one end of the reactor;
a second switch having one end connected to the another end of the first switch and the one end of the reactor, and another end connected to a negative-pole output terminal of the photovoltaic module, another end of the DC link capacitor and another end of the fourth switch;
a third switch having the one end connected to the one end of the DC link capacitor and the one end of the first switch, and another end connected to one end of the fourth switch and another end of the grid; and
a fourth switch having the one end connected to the another end of the third switch and the another end of the grid, and another end connected to the negative-pole output terminal of the photovoltaic module, the another end of the DC link capacitor and the another end of the second switch.

In accordance with another aspect of the present invention, the first switch and the second switch are connected in series to each other, and the third switch and the fourth switch are connected in series to each other, wherein the serially-connected pair of the first and second switches and the serially-connected pair of the third and fourth switches are connected in parallel to each other.

In accordance with still another aspect of the present invention, the first switch and the second switch operate at a high frequency region, and the third switch and the fourth switch operate at a low frequency range having the same phase and frequency as the grid.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this disclosure, illustrate exemplary embodiments and together with the description serve to explain the principles of the disclosure.

In the drawings:
FIG. 1 is a block diagram illustrating a configuration of a photovoltaic inverter in accordance with one exemplary embodiment of the present invention;
FIG. 2A is a waveform view of a switching control signal for half-unipolar switching of a switch unit in accordance with an exemplary embodiment of the present invention, which illustrates a waveform of a high-frequency switching control signal to control switching of a first switch for a time from 0.2 seconds to 0.21 seconds;
FIG. 2B is a waveform view of a switching control signal for half-unipolar switching of a switch unit in accordance with an exemplary embodiment of the present invention, which illustrates a waveform of a high-frequency switching control signal to control switching of a second switch for a time from 0.21 seconds to 0.22 seconds;
FIG. 2C is a waveform view of a fundamental wave-frequency switching control signal to control switching of a third switch;
FIG. 2D is a waveform view of a fundamental wave-frequency switching control signal to control switching of a fourth switch;
FIG. 3 is a view illustrating characteristics of an output waveform of a photovoltaic inverter in accordance with an exemplary embodiment of the present invention;
FIG. 4 is a waveform view of a leakage current illustrating characteristics of the leakage current in a photovoltaic inverter in accordance with an exemplary embodiment of the present invention;
FIG. 5 is a block diagram illustrating a configuration of a photovoltaic inverter in accordance with another exemplary embodiment of the present invention;
FIG. 6A is a waveform view of a switching control signal in a photovoltaic inverter in accordance with another exemplary embodiment of the present invention, which illustrates a waveform of a high-frequency switching control signal to control switching of a first switch for a time from 0.2 seconds to 0.21 seconds;
FIG. 6B is a waveform view of a switching control signal in a photovoltaic inverter in accordance with another exemplary embodiment of the present invention, which illustrates a waveform of a high-frequency switching control signal to control switching of a second switch for a time from 0.21 seconds to 0.22 seconds
FIG. 6C is a waveform view of a fundamental wave-frequency switching control signal to control switching of a third switch;
FIG. 6D is a waveform view of a fundamental wave-frequency switching control signal to control switching of a fourth switch; and
FIG. 6E is a waveform view of voltages of both ends of a parasitic capacitor in a photovoltaic inverter in accordance with another exemplary embodiment of the present invention.

### DETAILED DESCRIPTION OF THE DISCLOSURE

Hereinafter, preferred embodiments of the present invention will be described in detail with reference to the accompanying drawings, and the same or similar elements are designated with the same numeral references regardless of the numerals in the drawings and their redundant description will be omitted.

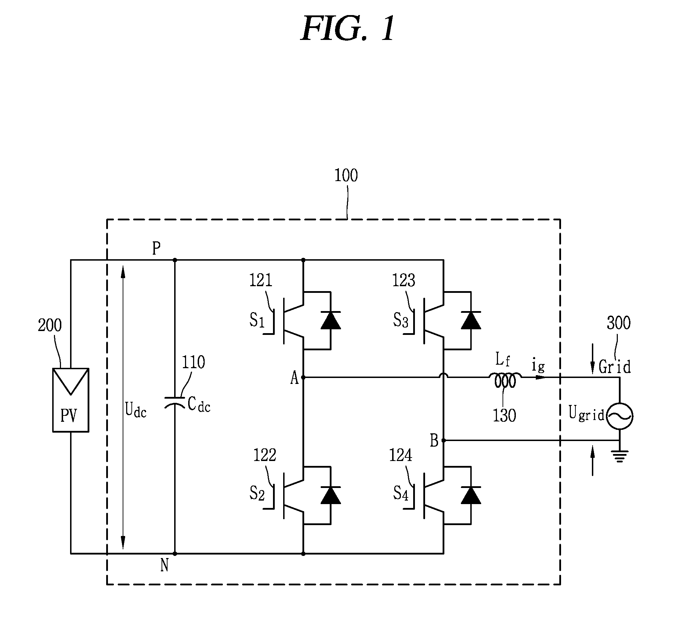

FIG. 1 is a block diagram illustrating a configuration of a photovoltaic inverter 100 in accordance with one exemplary embodiment of the present invention.

As illustrated in FIG. 1, a photovoltaic inverter 100 according to an exemplary embodiment of the present invention comprises a DC link capacitor 110, a switch unit 121, 122, 123 and 124, and a reactor 130.

The DC link capacitor 110 is connected in parallel to a photovoltaic module 200.

That is, one end of the DC link capacitor 110 is connected to a positive (+)-pole output terminal of the photovoltaic module 200, and another end of the DC link capacitor 110 is connected to a negative (-)-pole output terminal of the photovoltaic module 200.

The DC link capacitor 110 smoothes an input voltage (or an input current/input electric power).

The photovoltaic module 200 is provided in plurality. The plurality of photovoltaic modules 200 are arranged in series (or in a form of a string).

Also, the photovoltaic module 200 generates DC electricity (in other words electric power or electric energy) based on solar rays, and transfer (or outputs) the generated DC power to the photovoltaic inverter 100 connected thereto.

The photovoltaic module 200 is configured as a solar cell which includes a semiconductor, such as amorphous silicon, microcrystalline silicon, crystalline silicon, single crystalline silicon etc., a compound semiconductor and the like.

The switch unit 121, 122, 123 and 124 comprises a first switch 121, a second switch 122, a third switch 123 and a fourth switch 124.

The first switch 121 and the second switch 122 are connected in series to each other.

The third switch 123 and the fourth switch 124 are also connected in series to each other.

Also, the serially-connected pair of the first and second switches 121 and 122 and the serially-connected pair of the third and fourth switches 123 and 124 are connected in parallel to each other.

That is, one end of the first switch 121 is connected to the positive-pole output terminal of the photovoltaic module 200, one end of the DC link capacitor 110 and one end of the third switch 123. Another end of the first switch 121 is connected to one end of the second switch and one end of the reactor 130.

Also, one end of the second switch 122 is connected to the another end of the first switch 121 and the one end of the reactor 130. Another end of the second switch 122 is connected to the negative-pole output terminal of the photovoltaic module 200, another end of the DC link capacitor 110 and another end of the fourth switch 124.

The one end of the third switch 123 is connected to the one end of the DC link capacitor 110 and the one end of the first switch 121. Another end of the third switch 123 is connected to one end of the fourth switch 124 and another end of the grid 300.

Also, the one end of the fourth switch 124 is connected to the another end of the third switch 123 and the another end of the grid 300. Another end of the fourth switch 124 is connected to the negative-pole output terminal of the photovoltaic module 200, the another end of the DC link capacitor 110, and the another end of the second switch 122.

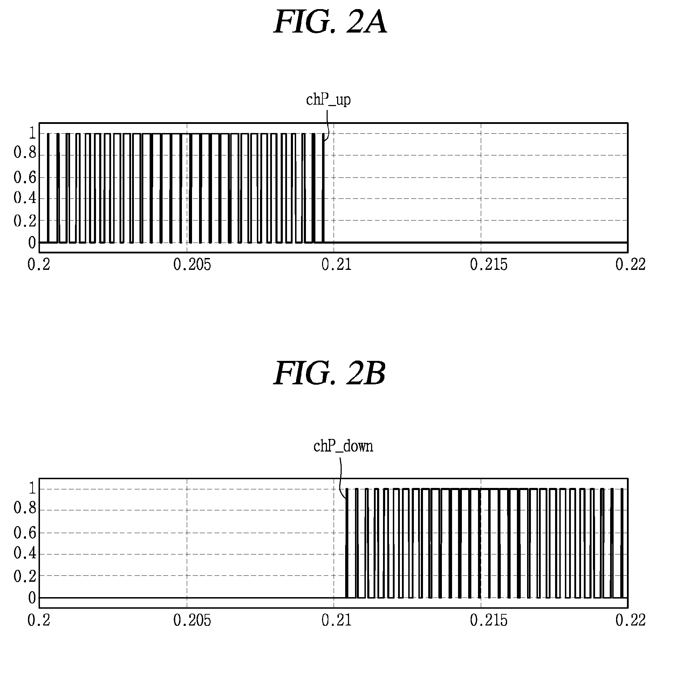

In this manner, the first to fourth switches 121, 122, 123 and 124 are switchable on the basis of a half-unipolar switching method as illustrated in FIGS. 2A to 2D. Here, the half-unipolar switching method is a method in which a pair of switches located at one leg (one pair of switches located at one side of pairs of switches connected in parallel) switches on or off according to a fundamental wave frequency, and another pair of switches located at the other leg switches on or off according to a high frequency.

That is, as illustrated in FIG. 2A, the first switch 121 is turned on at a high level of waveform (a left half part based on 0.21 seconds in the drawing) and turned off at a low level of waveform at a high frequency region of a switching control signal.

The second switch 122, as illustrated in FIG. 2B, is turned on at a high level of waveform (a right half part based on 0.21 seconds in the drawing) and turned off at a low level of waveform at a high frequency region of a switching control signal.

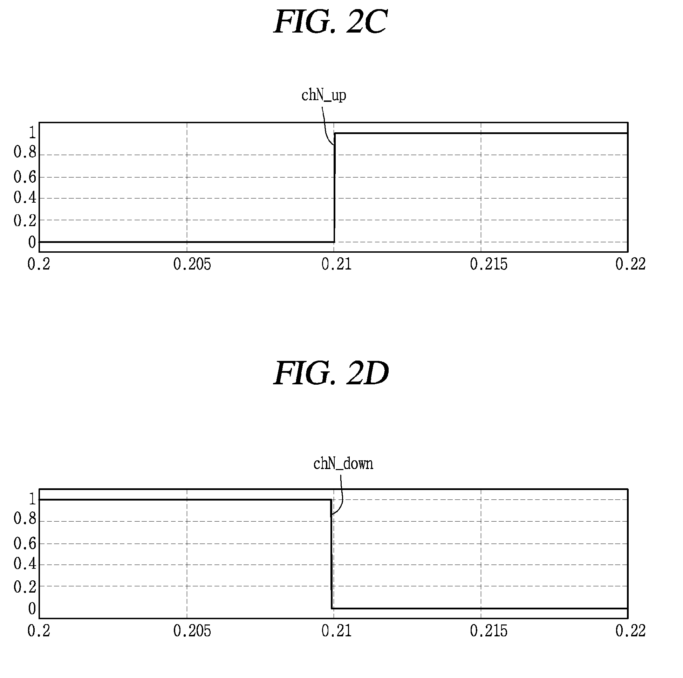

The third switch 123, as illustrated in FIG. 2C, is turned on at a high level of waveform and turned off at a low level of waveform at a low frequency region (i.e., a fundamental wave frequency region having the same phase and frequency as the commercial AC grid) of a switching control signal.

The fourth switch 124, as illustrated in FIG. 2D, is turned on at a high level of a waveform and turned off at a low level of waveform at a low frequency region (i.e., a fundamental wave frequency region having the same phase and frequency as the commercial AC grid) of a switching control signal.

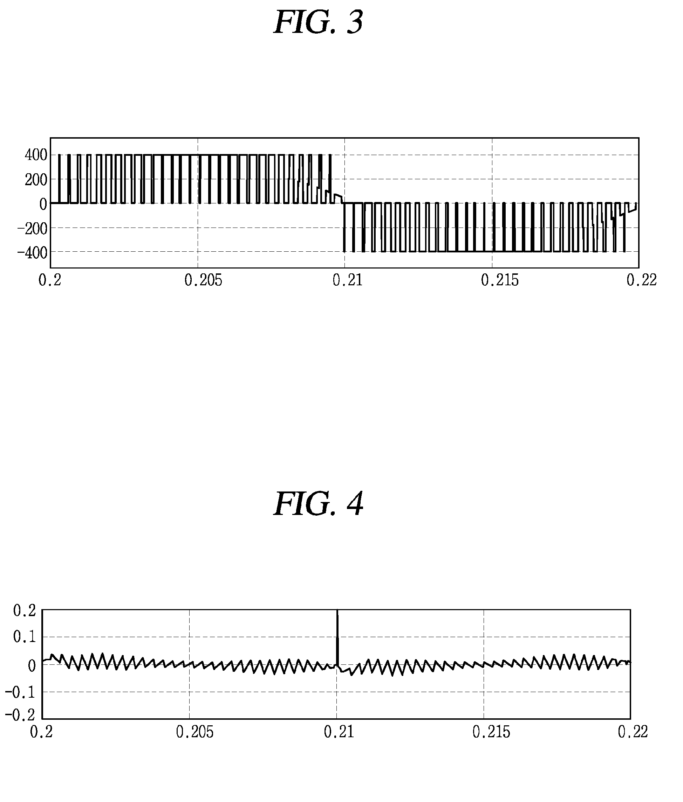

Also, characteristics according to an output waveform of the photovoltaic inverter 100 as illustrated in FIG. 3 and a leakage current characteristic of the photovoltaic inverter 100 as illustrated in FIG. 4 may be shown, respectively, according to a half unipolar switching operation of the switch unit 120 (or the first to fourth switches 121, 122, 123 and 124).

In this manner, by employing such half unipolar switching method for the switch unit 120 (or the first to fourth switches 121, 122, 123 and 124), a variation rate (that is "dv/dt") of a voltage applied to the DC link capacitor (or parasitic capacitor) 110 can be minimized, thereby remarkably reducing a leakage current.

One end of the reactor 130 is connected to another end of the first switch 121 and one end of the second switch 122. Another end of the reactor 130 is connected to one end of the grid 300.

Also, as compared with the related art reactor, which includes two reactors, namely, a first reactor (not illustrated) connected to another end of the first switch 121 and one end of the second switch 122, and a second reactor (not illustrated) connected to another end of the third switch 123 and one end of the fourth switch 124, the present invention has employed only one reactor 130 as a filter inductor.

Also, the reactor 130 has an inductance value which is set to be two times greater than inductance of the individual inductor (e.g., the first reactor or the second reactor) of the related art.

That is, in order to reduce a ripple of an output current of the photovoltaic inverter 100 (or in order to obtain the same ripple reduction rate as the related art including the plurality of reactors), the reactor 130 is designed to have inductance two times greater than the inductance of the individual reactor of the related art.

One end of the grid 300 is connected to another end of the reactor 130, and another end of the grid 300 is connected to another end of the third switch 123, one end of the fourth switch 124 and a ground.

The grid 300 also receives AC electric power (or AC voltage or AC current) supplied from the photovoltaic inverter 100.

That is, the grid 300 receives AC power which is converted by the half unipolar switching method of the first to fourth switches 121 to 124.

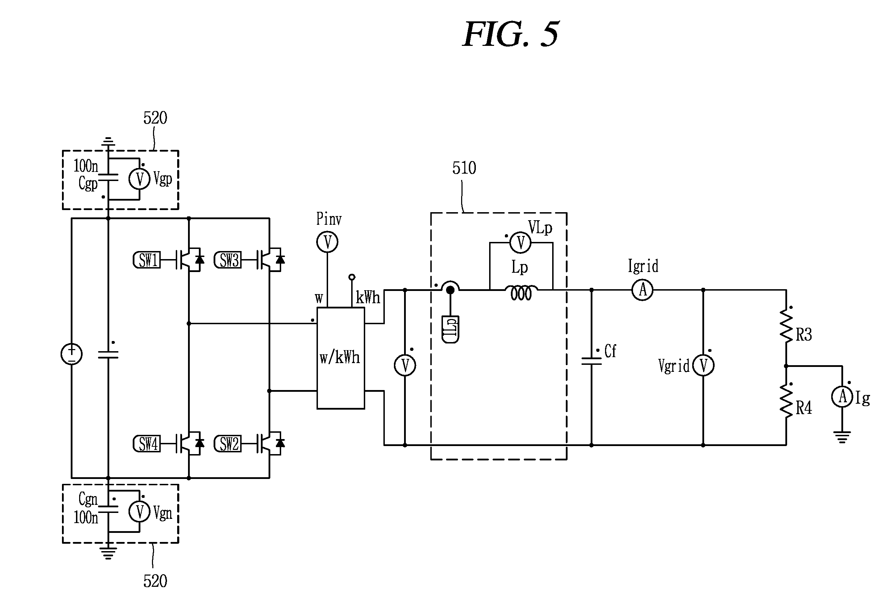

The embodiment of the present invention has illustrated the configuration of the typical photovoltaic inverter 100 illustrated in FIG. 1, but the present invention may not be limited to this. The configuration of the photovoltaic inverter 100 may also expand to a configuration illustrated in FIG. 5.

An output filter inductor 510 illustrated in FIG. 5 is provided by one in number, and designed to have inductance corresponding to a value which is two times greater than inductance of each of a plurality of inductors according to the related art.

Also, as illustrated in FIG. 5, parasitic capacitors 520 are provided at both ends of the positive-pole and negative-pole (PN) output terminals to check a leakage current.

The parasitic capacitors 520 are not configured in an actual power converting unit (PCU), but correspond to capacitance physically generated between the PN and a frame ground.

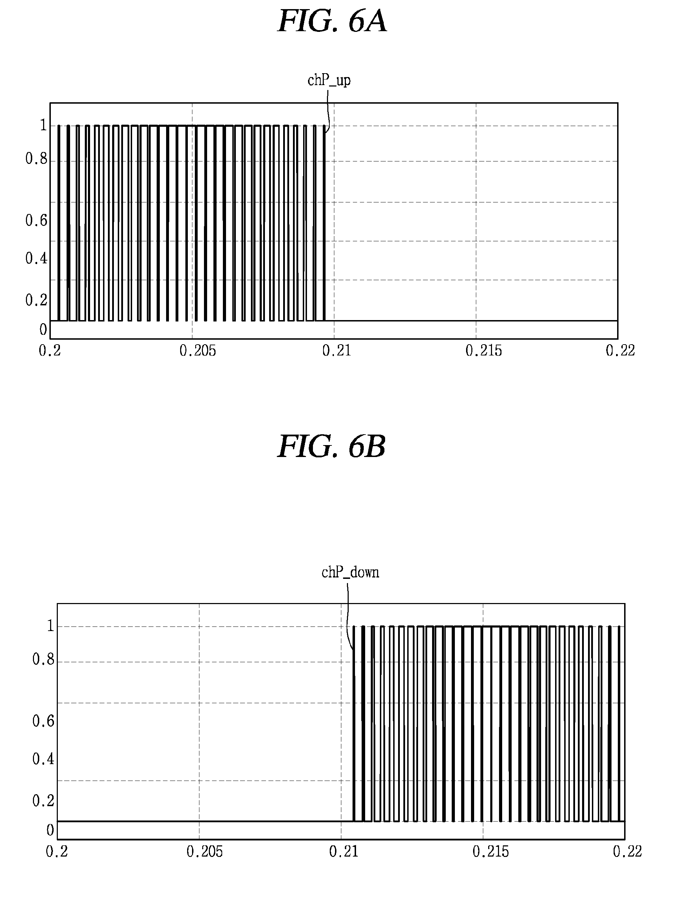

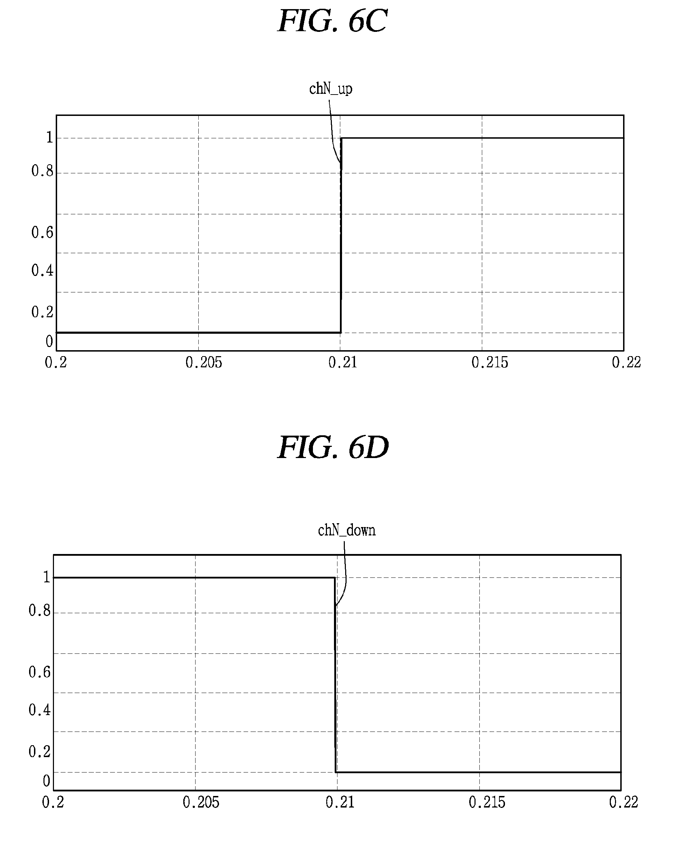

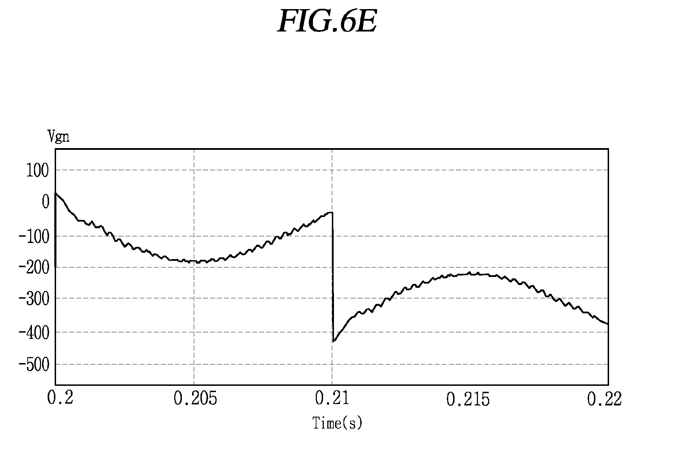

Also, switching control signal waveforms according to the photovoltaic inverter 100 illustrated in FIG. 5 may be represented as illustrated in FIGS. 6A to 6D, and a voltage waveform across both ends of each parasitic capacitor 520 may be represented as illustrated in FIG. 6E.

As illustrated in FIG. 6E, it can be noticed that dv/dt is low because Vgn (or the voltage across the both ends of the N-pole parasitic capacitor) has not drastically changed before and after a switching time point of 0.21 seconds.

As described above, by improving a pulse-width modulation (PWM) method (i.e., a half unipolar switching method) and a configuration of an output filter (reactor) of a photovoltaic inverter, an output voltage may be output with three levels according to the half unipolar switching method, a leakage current may be reduced by virtue of a minimized change in a voltage applied to each parasitic capacitor of the PN-pole output terminals, and a switching loss may be reduced in a manner of switching switches located at one leg according to a fundamental wave frequency.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A photovoltaic inverter **characterized in that** the photovoltaic inverter comprising:
a direct current link capacitor (110) connected in parallel to a photovoltaic module(200);
a switch unit (120) including first to fourth switches (121-124) and operating according to a half unipolar switching; and
a reactor (130) having one end connected to another end of the first switch (121) and one end of the second switch (122), and another end connected to a grid (300), the reactor (130) having a predetermined inductance,
wherein the half unipolar switching is switching a pair of switches at one leg according to a first frequency, and is switching another pair of switches at the other leg according to a higher frequency than the first frequency.

2. The photovoltaic inverter of claim 1, wherein the switch unit (120) comprises:
a first switch (121) having one end connected to a positive-pole output terminal of the photovoltaic module (200), one end of the DC link capacitor (110) and one end of the third switch (123), and the another end connected to the one end of the second switch (122) and one end of the reactor (130);
a second switch (122) having one end connected to the another end of the first switch (121) and the one end of the reactor (130), and another end connected to a negative-pole output terminal of the photovoltaic module (200), another end of the DC link capacitor (110) and another end of the fourth switch (124);
a third switch (123) having the one end connected to the one end of the DC link capacitor (110) and the one end of the first switch (121), and another end connected to one end of the fourth switch (124) and another end of the grid (300); and
a fourth switch (124) having the one end connected to the another end of the third switch (123) and the another end of the grid (300), and another end connected to the negative-pole output terminal of the photovoltaic module (200), the another end of the DC link capacitor (110) and the another end of the second switch (122).

3. The photovoltaic inverter of claim 1 or claim 2, wherein the first switch (121) and the second switch (122) are connected in series to each other, and the third switch (123) and the fourth switch (124) are connected in series to each other, wherein the serially-connected pair of the first and second switches (121, 122) and the serially-connected pair of the third and fourth switches (123, 124) are connected in parallel to each other.

4. The photovoltaic inverter of any one of claims 1-3, wherein the first switch (121) and the second switch (122) operate at a high frequency region, and the third switch (123) and the fourth switch (124) operate at a low frequency region having the same phase and frequency as the grid.
